# EUROPÄISCHE PATENTANMELDUNG

(11) **EP 1 847 891 A1**
(43) Veröffentlichungstag der Anmeldung: **24.10.2007**
(21) Anmeldenummer: 06008239.3
(22) Anmeldetag: 21.04.2006
(51) Int. Cl.: G05B 19/042

(54) **Sichere Parametrierung einer Sicherheitsschaltungsvorrichtung**

(71) Anmelder: SIEMENS AKTIENGESELLSCHAFT, 80333 München (DE)
(72) Erfinder: Albrecht, Christian, 92696 Flossenbürg (DE); Aufschneider, Klaus, 92278 Illschwang (DE); Krämer, Werner, 92421 Schwandorf (DE)

(57) **Zusammenfassung**

Zur Vermeidung von Unfällen und zur Sicherung von technischen Anlagen ist es üblich, eine Vielzahl von Sicherheitseinrichtungen, wie zum Beispiel Sicherheitssensoren, Notausschalter, Lichtschranken etc., vorzusehen. Die Schnittstellen zwischen diesen Sicherheitsvorrichtungen und der technischen Anlage werden durch Sicherheitsschaltungsvorrichtungen gebildet, die den Betriebszustand der Sicherheitsvorrichtungen überwachen und bei Alarmsituationen die technische Anlage stromlos setzen, bremsen oder vollständig abschalten.

Es wird eine Sicherheitsschaltungsvorrichtung 1 zur Überwachung von Sicherheitseinrichtungen einer technischen Anlage mit einer Eingabevorrichtung (5, SET, MODE) zur Vorgabe von Einstellungen eines oder mehrerer Betriebsparameter der Sicherheitsschaltungsvorrichtung und mit einer optischen Anzeigeeinrichtung (8,9) zur Anzeige der vorgegebenen Betriebsparametereinstallungen zu Kontrollzwecken vorgeschlagen, wobei die Eingabevorrichtung 5, SET, MODE programmtechnisch und/oder schaltungstechnisch zur Freigabe der angezeigten Betriebsparameter ausgebildet ist.

## Beschreibung

Die Erfindung bezieht sich auf ein Verfahren zur sicheren Parametrierung einer Sicherheitsschaltungsvorrichtung sowie auf eine Sicherheitsschaltungsvorrichtung, die nach diesem Verfahren parametrierbar ist. Der Begriff Sicherheitsschaltungsvorrichtung bezeichnet dabei allgemein eine Vorrichtung zur Überwachung von Sicherheitseinrichtungen in einer technischen Anlage.

Zur Vermeidung von Unfällen und zur Sicherung einer technischen Anlage sind häufig eine Vielzahl von Sicherheitseinrichtungen vorgesehen. Solche Sicherheitseinrichtungen umfassen beispielsweise Sensoren zur Überwachung von Zustandsparametern der Anlage, z.B. der Bewegung bestimmter Anlagenteile, Not-Aus-Schalter, Zweihand-Bedientasten oder so genannte Totmanntasten, Lichtschranken, Schutztüren und sonstige Sicherheitseinrichtungen.

Die Schnittstellen zwischen diesen Sicherheitseinrichtungen und der technischen Anlage werden durch Sicherheitsschaltungsvorrichtungen gebildet, die den Betriebszustand der Sicherheitseinrichtungen überwachen und bei Alarmsituationen die technische Anlage stromlos setzen, abbremsen oder vollständig abschalten.

Derartige Sicherheitsschaltungsvorrichtungen weisen dabei üblicherweise Bedienelemente wie zum Beispiel Potentiometer, Schalter oder DIP-Schalter auf, an denen Betriebsparameter der Sicherheitsschaltungsvorrichtung eingestellt werden. Solche Betriebsparameter umfassen beispielsweise Auslöseschwellwerte, Überwachungszeiten oder -raten, die Art der überwachten Sensoren, etc.

Um ein versehentliches Verstellen oder Eingabefehler an den Sicherheitsschaltungsvorrichtungen auszuschließen, sind diese Bedienelemente üblicherweise redundant, insbesondere zweifach vorhanden, wobei die eingestellten Betriebsparameter nur dann von der Sicherheitsschaltungsvorrichtung übernommen werden, wenn sie durch die redundanten Bedienelemente identisch vorgegeben werden.

Der Erfindung liegt die Aufgabe zugrunde, ein konstruktiv einfach zu realisierendes Verfahren zur gleichwohl sicheren Parametrierung einer Sicherheitsschaltungsvorrichtung anzugeben. Der Erfindung liegt weiterhin die Aufgabe zugrunde, eine Sicherheitsschaltungsvorrichtung derart auszubilden, dass sie nach diesem Verfahren parametrisierbar ist.

Diese Aufgabe wird bezüglich des Verfahrens gelöst durch die Merkmale des Anspruchs 1. Danach ist vorgesehen, dass in einem ersten Schritt durch einen Benutzer eine Einstellung eines oder mehrerer Betriebsparameter der Sicherheitsschaltungsvorrichtung vorgegeben wird, dass in einem zweiten Schritt die vorgegebene Einstellung des bzw. der Betriebsparameter zur Kontrolle angezeigt wird, dass in einem dritten Schritt die angezeigte Betriebsparametereinstellung, sofern sie mit der von dem Benutzer beabsichtigten Vorgabe übereinstimmt, durch Benutzereingriff freigegeben wird, und dass die angezeigte Betriebsparametereinstellung erst nach erfolgter Freigabe durch die Sicherheitsschaltungsvorrichtung übernommen, d.h. im weiteren Betrieb der Sicherheitsschaltungsvorrichtung verwendet wird.

Bevorzugt erfolgt die Freigabe der angezeigten Betriebsparametereinstellung durch eine Quittierung, die insbesondere durch Bedienung eines einzelnen Tasters oder einzelnen Bedientaste erfolgt.

Sowohl im Sinne einer vereinfachten Verfahrensdurchführung als auch mit dem Ziel, die zur Verfahrensdurchführung vorgesehenen Eingabemittel konstruktiv möglichst einfach halten zu können, ist bevorzugt die Verwendung der gleichen Eingabevorrichtung für die Vorgabe der Betriebsparametereinstellung und deren Freigabe vorgesehen.

Bei einer bevorzugten Ausführungsform wird, insbesondere vor der Vorgabe der Betriebsparametereinstellung, ein Kontrollschritt durchgeführt, im Zuge dessen die Anzeigeeinrichtung auf ihre ordnungsgemäße Funktion überprüft wird. Hierzu ist vorzugsweise vorgesehen, dass bei jedem Gerätestart die Anzeigeeinrichtung getestet wird, indem alle Anzeige- und/oder Funktionselemente aktiviert und - automatisch oder durch Benutzereingriff - wieder deaktiviert werden.

Bezüglich der zur Verfahrensdurchführung vorgesehenen Sicherheitsschaltungsvorrichtung wird die Aufgabe erfindungsgemäß gelöst durch die Merkmale des Anspruchs 6. Danach umfasst die Sicherheitsschaltungsvorrichtung eine Eingabevorrichtung zur Einstellung eines oder mehrerer Betriebsparameter der Sicherheitsschaltungsvorrichtung sowie eine optische Anzeigeeinrichtung zur Anzeige der eingestellten Betriebsparameter. Die Eingabevorrichtung umfasst mindestens ein Bedienelement, mittels welchem eine Einstellung eines oder mehrerer Betriebsparameter vorgebbar ist, wobei die Anzeigeeinrichtung dazu ausgebildet ist, die vorgegebene Einstellung der Betriebsparameter zur Kontrolle anzuzeigen. Die Eingabevorrichtung ist weiterhin dazu ausgebildet, dass über ein Bedienelement die vorgegebene und angezeigte Einstellung der Betriebsparameter freigebbar ist, wobei im Falle der Freigabe die vorgegebene und angezeigte Einstellung der Betriebsparameter in die Sicherheitsschaltungsvorrichtung übernommen wird.

Die erfindungsgemäße Sicherheitsschaltungsvorrichtung ist geeignet und ausgebildet zur Überwachung von Sicherheitseinrichtungen einer technischen Anlage. Bei der technischen Anlage handelt es sich beispielsweise um eine Produktionsmaschine, eine Presse oder ähnliches. Die Sicherheitseinrichtungen sind vorzugsweise in beliebiger Kombination Not-Aus-Schalter, Schutztüren und Einrichtungen, Lichtgitter, Drehzahlüberwachungssensoren und/oder Stillstandsüberwachungssensoren, etc.

Unter dem Begriff Sicherheitsschaltungsvorrichtung wird insbesondere eine Schaltvorrichtung verstanden, die nach Maßgabe der von den Sicherheitseinrichtungen erzeugten Eingangssignale Ausgangssignale zur Steuerung der technischen Anlage oder Komponenten davon erzeugt. Bevorzugt umfasst die Sicherheitsschaltungsvorrichtung sicherheitsspezifische Funktionen, wie zum Beispiel eine Selbstüberwachung, zwangsgeführte Kontakte oder eine redundant und/oder diversitär aufgebaute Sicherheitselektronik.

Insbesondere ist die Sicherheitsschaltungsvorrichtung den Anforderungen der EN 954-1 in Bezug auf die Kategorie 1, 2, 3 und/oder 4 entsprechend ausgebildet. Zusätzlich oder alternativ ist die Sicherheitsschaltungsvorrichtung der IEC 61 508 entsprechend realisiert. Bevorzugt weist die Sicherheitsschaltungsvorrichtung einen oder mehrere Schließer- und/oder Öffnerkontakte auf. Bei weiteren Ausführungsformen ist eine Querschlusserkennung als sicherheitsspezifische Funktion implementiert.

Die Eingabevorrichtung der Sicherheitsschaltungsvorrichtung dient zur Eingabe von Betriebsparametern der Sicherheitsschaltungsvorrichtung, vorzugsweise zur Konfiguration. Die Eingabevorrichtung kann prinzipiell jede Realisierung haben, die die strukturierte Eingabe von Betriebsparametereinstellungen erlaubt.

Ergänzend ist eine optische Anzeigeeinrichtung vorgesehen, die zur optischen Kontrolle der eingegebenen Betriebsparameter dient. Bevorzugt ist die optische Anzeigeeinrichtung separat von und ergänzend zu Bedienelementen der Eingabevorrichtung ausgebildet und insbesondere nicht identisch mit diesen.

Mit der Erfindung wird das Ziel erreicht, eine sichere Konfiguration, insbesondere Funktionseinstellung oder Parametrierung der Sicherheitsschaltungsvorrichtung zu ermöglichen, ohne die zur Parametereingabe vorgesehenen Eingabemedien - wie bisher üblich - redundant ausführen zu müssen. Vielmehr wird eine vergleichbare Sicherheit erfindungsgemäß durch einen schaltungstechnisch und/oder programmtechnisch festgelegten Ablauf von Vorgabe und Freigabe der Betriebsparametereinstellung ersetzt. In Anknüpfung an den bisherigen Stand der Technik wird auch bei der erfindungsgemäßen Sicherheitsschaltungsvorrichtung der Benutzer mit den vorgegebenen Betriebsparametern zweifach, und somit redundant konfrontiert, nämlich erstmalig bei der Vorgabe der Betriebsparameter (die im Gegensatz zu dem herkömmlichen Parametrierungsvorgang bevorzugt nicht-redundant erfolgt) und zum zweiten Mal bei der Quittierung oder Freigabe der Betriebsparameter.

Somit ist durch die erfindungsgemäße Sicherheitsschaltungsvorrichtung die notwendige Bediensicherheit gewährleistet oder sogar verbessert, weil jede Eingabe der Betriebsparameter nur einmal erfolgt und hierdurch die Wahrscheinlichkeit eines Eingabefehlers reduziert ist. Auf der anderen Seite kann durch Weglassen der überflüssig gewordenen redundanten Bedienelemente eine nach der erfindungsgemäßen Eingabevorrichtung besonders platzsparend und preisgünstig realisiert werden.

In vorteilhafter Realisierung umfasst die Sicherheitsschaltungsvorrichtung ein Verarbeitungsmodul, das die eingegebenen Betriebsparameter übernimmt und auf der Anzeigeeinrichtung zur Anzeige bringt.

Es ist bevorzugt vorgesehen, dass die Eingabevorrichtung so ausgebildet ist, dass die Freigabe der angezeigten Betriebsparameter durch eine Quittierung ermöglicht ist, die insbesondere durch einen einfachen Tastendruck oder durch gleichzeitiges Drücken von zwei Tasten erfolgt.

Bei einer bevorzugten Ausführungsform weist die Eingabevorrichtung eine Taste zur Beendigung der Eingabe der Betriebsparameter auf, welches zugleich zur Quittierung der angezeigten Betriebsparameter ausgebildet ist und somit eine Doppelfunktion innehat.

Bei einer bevorzugten Realisierung der Sicherheitsschaltungsvorrichtung umfasst die Eingabevorrichtung mindestens ein mechanisches Einstellelement zur Eingabe der Betriebsparameter. Das mindestens eine mechanische Einstellelement ist beispielsweise als DIP-Element oder Potentiometer oder ähnliches ausgebildet.

Insbesondere in Verbindung mit der Ausbildung des mechanischen Einstellelements umfasst die Anzeigeeinrichtung bevorzugt eine oder mehrere Signalleuchten, die vorzugsweise als Lämpchen oder LEDs ausgebildet. Die Anzahl der Signalleuchten ist so gewählt, dass die eingegebenen und/oder übernommenen Betriebsparameter für den Benutzer verständlich darstellbar sind. Alternativ kann als Anzeigeeinrichtung auch eine alphanumerische Anzeige oder ein sonstiges Display, z.B. LCD-, LED- oder TFT-Bildschirm verwendet werden.

Ergänzend oder alternativ weist die Eingabevorrichtung mindestens eine Bedientaste auf. Diese mindestens eine Bedientaste ist vorzugsweise so verschaltet, dass durch diese ein durch die Anzeigeeinrichtung dargestelltes Auswahlmenü steuerbar ist, wobei über das Auswahlmenü die Eingabe der Betriebsparameter erfolgt.

Die Betriebsparameter umfassen bevorzugt insbesondere Angaben zu folgenden Betriebsarten:

Art der Eingangskreisverschaltung: Einkanaliger Betrieb, zweikanaliger Betrieb, zweimal einkanaliger Betrieb und/oder einmal einkanaliger-Betrieb. Der einkanalige Betrieb ist insbesondere in Übereinstimmung mit der Eingangsbeschaltung EN 60204. Der zweikanalige Betrieb wird bevorzugt bei dem Einsatz von redundanten Eingangskreisen verwendet. Eine weitere Alternative ist die Konfiguration für eine Verschaltung für den Zweihandbetrieb, wobei das Zweihandbediengerät durch gleichzeitiges Betätigen von zwei Tastern aktiviert werden muss.

Alternativ oder ergänzend kann als Betriebsparameter die Betriebsart automatischer Start aktiviert werden, wobei die Sicherheitsschaltungsvorrichtung erst aktiv wird, wenn der Eingangskreis und der Rückführkreis geschlossen sind.

Stattdessen kann als Betriebsparameter auch ein überwachter Start eingestellt werden, wobei die Sicherheitsschaltungsvorrichtung erst aktiv wird, wenn ein Starttaster betätigt und wieder losgelassen wurde.

Ferner werden als Betriebsparameter Kenngrößen zu Überwachungsdrehzahlen eines Drehzahlrichters, beliebige Überwachungszeiten und/oder für die Art der Sicherheitssensoren optional übergeben.

Weitere Merkmale, Einzelheiten oder Wirkungen ergeben sich aus der Beschreibung und den Figuren von zwei Ausführungsbeispielen der Erfindung. Darin zeigen:
- FIG 1: ein erstes Ausführungsbeispiel einer Sicherheitsschaltungsvorrichtung in Blockdarstellung,
- FIG 2: ein zweites Ausführungsbeispiel der Sicherheitsschaltungsvorrichtung in gleicher Darstellung wie in FIG 1.

Einander entsprechende Teile sind in allen Figuren stets mit denselben Bezugszeichen versehen.

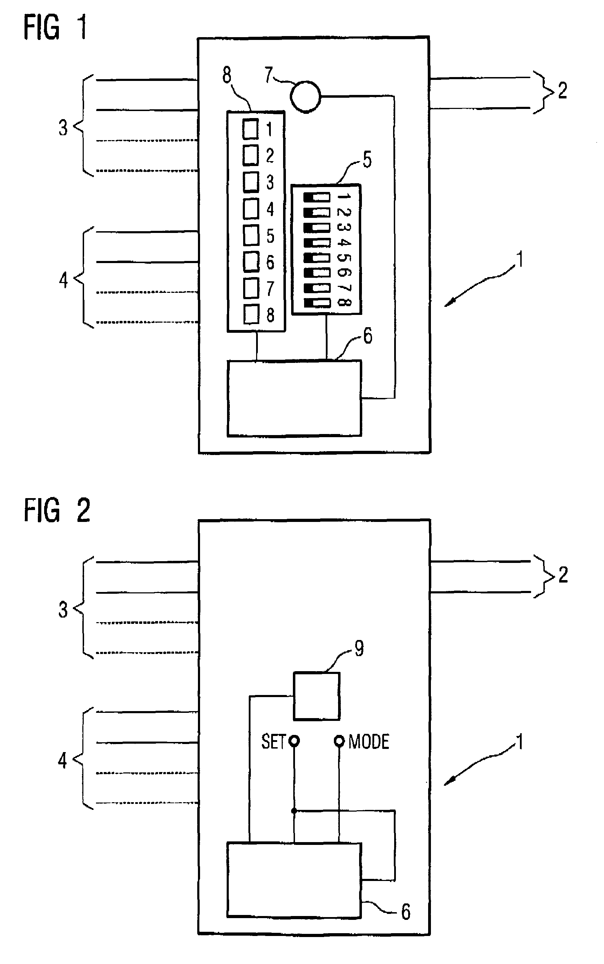

Die FIG 1 zeigt eine Sicherheitsschaltungsvorrichtung 1, die beispielsweise für den Einbau in einen Schaltschrank ausgebildet ist und für Montagezwecke beispielsweise eine mechanische Schnittstelle für eine Hutschienenmontage aufweist. Die Sicherheitsschaltungsvorrichtung 1 ist als Sicherheitselektronik ausgebildet und umfasst optional eine Selbstüberwachung, eigensicher- oder zwangsgeführte Schaltkontakte und/oder Querschlusserkennungen. Optional ist die Sicherheitsschaltungsvorrichtung 1 mit elektronischen Schaltelementen, also kontaktfreien Schaltelementen ausgerüstet.

Zur Spannungsversorgung sind Zuleitungen 2 an der Sicherheitsschaltungsvorrichtung 1 ausgebildet, über die eine Versorgungsspannung von beispielsweise 24 Volt zugeführt wird.

Weiterhin sind eine Mehrzahl von Anschlusskontakten 3, die beispielsweise als Federzugkontakte oder Schraubanschlüsse ausebildet sein können, vorgesehen, die zur elektrischen Verbindung der Sicherheitsschaltungsvorrichtung 1 mit (nicht dargestellten) Sicherheitssensoren dienen. Derartige Sicherheitssensoren sind beispielsweise als Not-Aus-Taster, Schutztürgrenztaster, Starttaster, Lichtgitter, aber auch als Drehzahl- und/oder Stillstandswächter ausgebildet.

Die Anschlusskontakte 3 dienen somit zur Kontaktierung eines oder mehrerer Eingangskreise und sind zumindest zum Teil in Kanäle eingeteilt, wobei beispielhaft in der Darstellung in FIG 1 die ersten beiden Anschlusskontakte 3 einen ersten Kanal und die gestrichelt gezeigten Anschlusskontakte 3 einen zweiten Kanal repräsentieren. Zur Ausgabe von Steuersignalen an eine zu steuernde technische Anlage sind weitere Anschlusskontakte 4 vorgesehen, die einem oder mehreren Ausgangskreisen zugeordnet sind. Diese Ausgangskontakte 4 beziehungsweise der oder die Ausgangskreise werden zur Kontaktierung der Sicherheitsschaltungsvorrichtung 1 mit z.B. Schützen, Hilfsschützen oder ähnlichem genutzt.

Wie an der Vielzahl der Anschlusskontakte 3 und 4 zu erkennen ist, ist die Sicherheitsschaltungsvorrichtung 1 gemäß ihrer Verschaltung intern zu konfigurieren. Zusätzlich können verschiedene Betriebsarten der Sicherschaltungsvorrichtung 1 eingestellt werden. Die zur Konfiguration notwendigen Betriebsdaten und Daten zur Einstellung der Betriebsart werden unter dem Begriff Betriebsparameter zusammengefasst. Zur Einstellung dieser Betriebsparameter weist die Sicherheitsschaltungsvorrichtung 1 einen DIP-Schalter 5 auf, der über acht Einzelschalter verfügt, die in der FIG 1 von 1 bis 8 durchnummeriert sind. Optional kann die Sicherheitsschaltungsvorrichtung 1 weitere DIP-Schalter und/oder Potentiometer zur Einstellung von Betriebsparametern umfassen, jedoch ist für jeden Betriebsparameter genau eine Einstellmöglichkeit vorgesehen, sodass die Bedienelemente zur Einstellung der Betriebsparameter nicht-redundant sind.

Zur Verarbeitung der eingestellten Betriebsparameter weist die Sicherheitsschaltungsvorrichtung 1 ein Verarbeitungsmodul 6 auf, welches zum Auslesen der eingestellten Betriebsparameter aus dem DIP-Schalter 5 ausgebildet ist. Zudem ist das Verarbeitungsmodul 6 mit einem Bestätigungsknopf 7 und mit einer LCD- oder LED-Anzeige 8 (nachfolgend kurz als Anzeige 8 bezeichnet) verschaltet, die zur Anzeige der mit dem DIP-Schalter 5 eingestellten Betriebsparameter ausgebildet ist. Dabei ist zu unterstreichen, dass der DIP-Schalter 5 die eingestellten Betriebsparameter nicht direkt, sondern nur über das Verarbeitungsmodul 6 an die Anzeige 8 übertragen kann.

Die Inbetriebnahme der Sicherheitsschaltungsvorrichtung 1 erfolgt wie nachfolgend erläutert:

In einem ersten optionalen Kontrollschritt wird insbesondere bei dem Start der Sicherheitsschaltungsvorrichtung 1 die Anzeige, also die Anzeige 8, getestet, indem alle LEDs der Anzeige 8 ein und wieder ausgeschaltet werden. Die Kontrolle der Anzeige 8 erfolgt durch den Anwender visuell. In einem nächsten Schritt stellt der Anwender an dem DIP-Schalter 5 die gewünschten Betriebsparameter ein. Durch eine erste Betätigung des Bestätigungsknopfs 7 werden die eingestellten Betriebsparameter in das Verarbeitungsmodul 6 eingelesen. In einem nächsten Schritt gibt das Verarbeitungsmodul 6 die eingelesenen Betriebsparameter an die Anzeige 8 zur Anzeige aus. Nach der Ausgabe der Betriebsparameter bestätigt oder quittiert der Anwender die angezeigten Betriebsparameter durch ein weiteres Betätigen des Betätigungsknopfes 7 und erst dann werden die Betriebsparameter freigegeben und für den Schutzbetrieb der Sicherheitsschaltungsvorrichtung 1 verwendet.

Auf diese Weise ist der Anwender in der Lage die Konfiguration, also die Aktivierung und/oder Verschaltung der Eingangskanäle und/oder der Ausgangskanäle, sowie die Auswahl der Betriebsarten, wie zum Beispiel Autostart, überwachter Start und/oder weitere Parameter wie Überwachungsdrehzahl, Zeiten oder Arten der Sensoren kontrolliert fehlerfrei einzustellen.

Die FIG 2 zeigt ein zweites Ausführungsbeispiel einer erfindungsgemäßen Sicherheitsschaltungsvorrichtung 1, die sich von der Vorrichtung in FIG 1 nur durch die Bedien- und Anzeigemodule und somit durch die Bedienung unterscheidet.

Die Einstellung der Betriebsparameter erfolgt bei dem Ausführungsbeispiel in FIG 2 über Bedienknöpfe, die als SET und MODE bezeichnet sind, und über die der Anwender die Betriebsparameter über ein oder mehrere auf einer LCD- oder LED-Anzeige 9 angezeigte Menüs einstellt. Analog zu der Ausführungsform in FIG 1 übergibt der Bediener die in der Anzeige 9 gezeigten Betriebsparameter durch eine erste Betätigung der Bedientasten SET oder MODE an das Verarbeitungsmodul 6. Das Verarbeitungsmodul 6 steuert die Anzeige 9 so, dass die eingegebenen Betriebsparameter - optional in abweichender graphischer Ausgestaltung - insbesondere nochmals in der Anzeige 9 dargestellt werden. Durch ein weiteres Betätigen einer der Bedientasten SET oder MODE werden die angezeigten Betriebsparameter freigegeben und nachfolgend für den Schutzbetrieb verwendet.

Bei beiden Ausführungsbeispielen der Sicherheitsschaltungsvorrichtung 1 ist das Verarbeitungsmodul beispielsweise als Mikrocontroller, DSP oder ähnliches ausgebildet und umfasst einen oder mehrere Speicher.

## Patentansprüche

1. Verfahren zur sicheren Parametrierung einer Sicherheitsschaltvorrichtung umfassend die Schritte:
(a) Vorgabe einer Einstellung eines oder mehrerer Betriebsparameter der Sicherheitsschaltvorrichtung,
(b) Anzeige der vorgegebenen Betriebsparametereinstellung durch die Sicherheitsschaltungsvorrichtung,
(c) Freigabe der angezeigten Betriebsparametereinstellung,
(d) Übernahme der vorgegebenen und angezeigten Betriebsparametereinstellung durch die Sicherheitsschaltungsvorrichtung.

2. Verfahren nach Anspruch 1,
**dadurch gekennzeichnet**, das die Vorgabe der Betriebsparametereinstellung nicht-redundant erfolgt.

3. Verfahren nach Anspruch 1 oder 2,
**dadurch gekennzeichnet, dass** die Freigabe durch Bedienung eines einzelnen Tasters oder einer einzelnen Bedientaste erfolgt.

4. Verfahren nach einem der Ansprüche 1 bis 3,
**dadurch gekennzeichnet, dass** die Vorgabe und die Freigabe der Betriebsparametereinstellung durch die gleiche Eingabevorrichtung erfolgt.

5. Verfahren nach einem der Ansprüche 1 bis 4,
**gekennzeichnet durch** einen Kontrollschritt zur Kontrolle einer zur Anzeige der vorgegebenen Betriebsparametereinstellung vorgesehenen Anzeigeeinrichtung.

6. Sicherheitsschaltungsvorrichtung (1) zur Überwachung von Sicherheitseinrichtungen einer technischen Anlage, mit einer Eingabevorrichtung (5, SET, MODE) zur Einstellung eines oder mehrerer Betriebsparameter der sicherheitsschaltungsvorrichtung (1), mit einer optischen Anzeigeeinrichtung (8,9) zur Anzeige der Betriebsparametereinstellung, wobei die Eingabevorrichtung mindestens ein Bedienelement (5, SET) zur Vorgabe einer Einstellung der Betriebsparameter umfasst, wobei die Anzeigeeinrichtung (8,9) dazu ausgebildet ist, die vorgegebene Betriebsparametereinstellung zur Kontrolle anzuzeigen, wobei über ein Bedienelement (7, MODE) die vorgegebene und angezeigte Betriebsparametereinstellung freigebbar ist, und wobei die Eingabevorrichtung (5, SET, MODE) dazu ausgebildet ist, die vorgegebene und angezeigte Betriebsparametereinstellung bei Freigabe zu übernehmen.

7. Sicherheitsschaltungsvorrichtung (1) nach Anspruch 6,
**dadurch gekennzeichnet, dass** Bedienelemente (5, SET, MODE) der Eingabevorrichtung nicht-redundant aufgebaut ist.

8. Sicherheitsschaltungsvorrichtung (1) nach Anspruch 6 oder 7,
**dadurch gekennzeichnet, dass** die Anzeigeeinrichtung (8) eine oder mehrere Signalleuchten umfasst.

9. Sicherheitsschaltungsvorrichtung (1) nach einem der Ansprüche 6 bis 8,
**dadurch gekennzeichnet, dass** die Eingabevorrichtung mindestens eine Bedientaste (7, SET, MODE) aufweist.

10. Sicherheitsschaltvorrichtung (1) nach einem der Ansprüche 6 bis 9,
**dadurch gekennzeichnet, dass** die Betriebsparameter Einstellungen zu den Betriebsarten einkanaliger Betrieb, zweikanaliger Betrieb, Autostart, überwachter Start, 2 x einkanaliger Betrieb, 1 x einkanaliger Betrieb und/oder zu den Parametern Überwachungsdrehzahl, -zeiten und/oder Art der Sicherheitseinrichtungen umfassen.
